# EUROPEAN PATENT APPLICATION

(11) **EP 3 432 669 A1**
(43) Date of publication of application: **23.01.2019**
(21) Application number: 16898237.9
(22) Date of filing: 14.04.2016
(51) Int. Cl.: H04W 72/06

(54) **INFORMATION TRANSMISSION METHOD, DEVICE AND SYSTEM**

(71) Applicant: Huawei Technologies Co., Ltd., Longgang District Shenzhen, Guangdong 518129 (CN)
(72) Inventor: ZHANG, Xingwei, Shenzhen Guangdong 518129 (CN); LI, Chao, Shenzhen Guangdong 518129 (CN)
(74) Representative: Gill Jennings & Every LLP
(86) International application number: PCT/CN2016/079286
(87) International publication number: WO 2017/177419

(57) **Abstract**

The present invention discloses an information transmission method and system, and a device, relates to the communications field, and can resolve a prior-art problem that DCI detection performed by a receive end has relatively high complexity and causes relatively high power consumption. A specific solution includes: obtaining, by a first communications device, first configuration information, where the first configuration information is used to instruct the first communications device to detect downlink control information DCI in a first area; and detecting, by the first communications device, the DCI in the first area within a first TTI. The present invention is applied to information transmission.

## Description

### TECHNICAL FIELD

The present invention relates to the communications field, and in particular, to an information transmission method and system, and a device.

### BACKGROUND

In a wireless network communications system such as a Long Term Evolution (English: Long Term Evolution, LTE for short) system, a 3rd Generation Partnership Project (English: 3rd Generation Partnership Project, 3GPP for short) system, and a Long Term Evolution-Advanced (English: Long Term Evolution-Advanced, LTE-A for short) system, a time-frequency resource is divided into a plurality of radio frames in time domain for information transmission. One radio frame usually has a length of 10 milliseconds (English: Millisecond, ms for short), and includes 10 subframes each having a length of 1 ms. One subframe includes 12 or 14 orthogonal frequency division multiplexing (English: Orthogonal Frequency Division, OFDM for short) symbols. In a time domain indicated by one subframe, that is, in one transmission time interval (English: Transmission Time Interval, TTI for short), a plurality of channels such as a physical downlink control channel (English: Physical Downlink Control Channel, PDCCH for short) and a physical downlink shared channel (English: Physical Downlink Shared Channel, PDSCH for short) can be transmitted. The PDCCH channel can be used to transmit downlink control information (English: Downlink Control Information, DCI for short), and the DCI information is used to indicate data resource allocation, a modulation and demodulation scheme, and the like. Generally, the PDCCH occupies the first 1 to 3 OFDM symbols of a subframe. A receive end cannot obtain a specific resource location of DCI of the receive end in the PDCCH and an aggregation level (English: Aggregation level, AL for short) of a control channel element (English: Control Channel Element, CCE for short) used by the PDCCH corresponding to the DCI of the receive end. Therefore, the receive end needs to perform blind detection to obtain the DCI. To be specific, the receive end constantly attempts to detect the PDCCH by using different resource locations, DCI lengths (when a plurality of pieces of DCI need to be decoded), and aggregation levels, until the DCI is correctly decoded. To support a small-packet service, one TTI may include only half a subframe or several OFDM symbols. In an application scenario of such a small-packet service, there is still an independent PDCCH in each TTI, resulting in excessively high control signaling overheads.

In the prior art, when a TTI is relatively short, DCI information is transmitted after being added to a PDSCH. In other words, a part of resources occupied by the PDSCH is used to transmit the DCI information. If the DCI is used to indicate uplink data transmission, because data transmission that is performed in a TTI that is after the current TTI is scheduled and there is no PDSCH to carry the DCI, the DCI still needs to be sent on a PDCCH. This requires resource reservation for the PDCCH. If excessive resources are reserved for the PDCCH, a waste of resources is caused; or if excessively few resources are reserved for the PDCCH, the resources may be insufficient when there are a large quantity of UEs that need to be scheduled. For a balancing purpose, in the prior art, the DCI may be in the PDSCH or the PDCCH, and a receive end needs to detect the DCI information in both the PDSCH and the PDSCH.

In a process for implementing the foregoing information transmission, the inventor found that in the prior art, DCI detection performed by the receive end has relatively high complexity and causes relatively high power consumption.

### SUMMARY

To resolve a prior-art problem that DCI detection performed by a receive end has relatively high complexity and causes relatively high power consumption, the present invention provides an information transmission method and system, and a device. The technical solutions are as follows.

According to a first aspect, the present invention provides an information transmission method, where the method includes:
obtaining, by a first communications device, first configuration information, where the first configuration information is used to instruct the first communications device to detect downlink control information DCI in a first area, and the first area is a time-frequency resource within a first transmission time interval TTI; and
detecting, by the first communications device, the DCI in the first area within the first TTI.

In a possible implementation, a time length of the first TTI is less than that of one subframe.

In a possible implementation, the first area is a time-frequency resource included by a physical downlink control channel PDCCH, or the first area is a time-frequency resource included by a physical downlink shared channel PDSCH. Optionally, the PDCCH may be a common PDCCH, an enhanced PDCCH (EPDCCH), or a short physical downlink control channel sPDCCH (a PDCCH used within a TTI whose length is less than that of one subframe). In a specific implementation, the first area is a time-frequency resource, within the first TTI, occupied by a PDCCH, or the first area is a time-frequency resource, within the first TTI, occupied by a PDSCH.

In a possible implementation, the first area includes a preset orthogonal frequency division multiplexing OFDM symbol or resource block RB. For example, the first area may be an odd-numbered resource block RB within the first TTI, or the first area is an even-numbered RB within the first TTI, or the first area is the first several RBs within the first TTI, or the first area is the last several RBs within the first TTI.

For example, the first area may be prestored by the first communications device, the first configuration information is used to only indicate that the DCI is detected in the first area, or the first area is included in the first configuration information.

In a possible implementation, the first configuration information is further used to indicate a format of the DCI, and the format of the DCI includes at least one of format 1, format 1A, format 1B, format 1C, format 1D, format 2, format 2A, format 2B, format 2C, format 0, and format 4. For example, the first configuration information may include the DCI format, or the first configuration information does not include a DCI format. A specific indication manner of the first configuration information is not limited in the present invention. For example, the first configuration information may not include a DCI format, and the first area may be corresponding to several formats of the DCI formats. When the first configuration information indicates that detection is performed in the first area, the first communications device detects only these several DCI formats corresponding to the first area. Alternatively, the first configuration information includes a DCI format that the first communications device needs to detect. Specifically, a specific field of the first configuration information may be used to indicate the DCI format that needs to be detected. Certainly, descriptions are provided herein only by using an example.

In a possible implementation, the obtaining, by a first communications device, first configuration information includes:
receiving, by the first communications device, the first configuration information sent by a second communications device.

In a possible implementation, the first communications device prestores the first configuration information.

In a possible implementation, the first configuration information is transmitted to the first communications device by Radio Resource Control RRC signaling, a system information block SIB, or media access control MAC signaling.

In a possible implementation, the receiving, by the first communications device, the first configuration information sent by a second communications device includes:
detecting, by the first communications device, the first configuration information in a second area, where the second area is a time-frequency resource, within the first TTI, included by a PDCCH, or the second area is a time-frequency resource, within the first TTI, included by a PDSCH.

In a specific implementation, the second area may be a time-frequency resource occupied by the first configuration information, and the first communications device may decode the first configuration information directly in the second area. A length of the first configuration information may be a fixed length, or a length of the first configuration information may be the same as a length of the DCI.

Optionally, the second area may include a preset orthogonal frequency division multiplexing OFDM symbol or resource block RB. For example, the second area may be an odd-numbered resource block RB within a second TTI, the second area is an even-numbered RB within the second TTI, the second area is the first several RBs within the second TTI, or the second area is the last several RBs within the second TTI. Preferably, the second TTI is the same as the first TTI, or the second TTI is a TTI before the first TTI.

In a possible implementation, the first configuration information includes a radio network temporary identifier RNTI field, or the first configuration information includes a cyclic redundancy code CRC scrambled by the RNTI.

In a possible implementation, before the detecting, by the first communications device, the DCI in the first area within the first TTI, the method further includes:
obtaining, by the first communications device, first length information, where the first length information is used to indicate a length of the DCI; and
the detecting, by the first communications device, the DCI in the first area within the first TTI includes:
   detecting, by the first communications device based on the length indicated by the first length information, the DCI in the first area within the first TTI.

For example, the first communications device prestores the first length information; in other words, the DCI detected by the first communications device keeps unchanged in length within a specific period of time.

In a possible implementation, the first area is a time-frequency resource occupied by the DCI; in other words, the first area is a specific resource location of the DCI within the first TTI; and
the detecting, by the first communications device, the DCI in the first area within the first TTI includes:
decoding, by the first communications device, the DCI in the first area within the first TTI.

In a possible implementation, when the DCI is used to indicate a downlink grant for the first communications device, the first area includes the first N orthogonal frequency division multiplexing OFDM symbols within the first TTI, where N is an integer and N belongs to [1,14].

In a possible implementation, when the DCI is used to indicate an uplink grant for the first communications device, the first area includes the last M OFDM symbols of within first TTI, where M is an integer and M belongs to [1,14].

For example, N is 1, and M is 1.

According to a second aspect, the present invention provides an information transmission method, where the method includes:
sending, by a second communications device, first configuration information to a first communications device, where the first configuration information is used to instruct the first communications device to detect downlink control information DCI in a first area, and the first area is a time-frequency resource within a first transmission time interval TTI; and
sending, by the second communications device to the first communications device, the DCI in the first area indicated in the first configuration information.

In a possible implementation, the first area includes a preset orthogonal frequency division multiplexing OFDM symbol or resource block RB.

In a possible implementation, the first area is a time-frequency resource included by a physical downlink control channel PDCCH, or the first area is a time-frequency resource included by a physical downlink shared channel PDSCH.

In a possible implementation, a time length of the first TTI is less than that of one subframe.

In a possible implementation, the first configuration information is further used to indicate a format of the DCI, and the format of the DCI includes at least one of format 1, format 1A, format 1B, format 1C, format 1D, format 2, format 2A, format 2B, format 2C, format 0, and format 4.

In a possible implementation, the first configuration information is transmitted to the first communications device by Radio Resource Control RRC signaling, a system information block SIB, or media access control MAC signaling.

In a possible implementation, the first configuration information is in a second area, where the second area is a time-frequency resource, within the first TTI, included by a PDCCH, or the second area is a time-frequency resource, within the first TTI, included by a PDSCH.

In a possible implementation, the first configuration information includes a radio network temporary identifier RNTI field, or the first configuration information includes a cyclic redundancy code CRC scrambled by the RNTI.

In a possible implementation, the first area is a time-frequency resource occupied by the DCI.

In a possible implementation, when the DCI is used to indicate a downlink grant for the first communications device, the first area includes the first N orthogonal frequency division multiplexing OFDM symbols within the first TTI, where N is an integer and N belongs to [1,14].

In a possible implementation, when the DCI is used to indicate an uplink grant for the first communications device, the first area includes the last M OFDM symbols within the first TTI, where M is an integer and M belongs to [1,14].

According to a third aspect, the present invention provides a first communications device, including:
an obtaining unit, configured to obtain first configuration information, where the first configuration information is used to instruct the first communications device to detect downlink control information DCI in a first area, and the first area is a time-frequency resource within a first transmission time interval TTI; and
a receiving unit, configured to detect the DCI in the first area within the first TTI.

In a possible implementation, the first area is a time-frequency resource included by a physical downlink control channel PDCCH, or the first area is a time-frequency resource included by a physical downlink shared channel PDSCH.

In a possible implementation, the first area includes a preset orthogonal frequency division multiplexing OFDM symbol or resource block RB.

In a possible implementation, a time length of the first TTI is less than that of one subframe.

In a possible implementation, the first configuration information is further used to indicate a format of the DCI, and the format of the DCI includes at least one of format 1, format 1A, format 1B, format 1C, format 1D, format 2, format 2A, format 2B, format 2C, format 0, and format 4.

In a possible implementation, the receiving unit is further configured to receive the first configuration information sent by a second communications device.

In a possible implementation, the first configuration information is transmitted to the first communications device by Radio Resource Control RRC signaling, a system information block

SIB, or media access control MAC signaling.

In a possible implementation, the receiving unit is further configured to detect the first configuration information in a second area, where the second area is a time-frequency resource, within the first TTI, included by a PDCCH, or the second area is a time-frequency resource, within the first TTI, included by a PDSCH.

In a possible implementation, the first configuration information includes a radio network temporary identifier RNTI field, or the first configuration information includes a cyclic redundancy code CRC scrambled by the RNTI.

In a possible implementation, the obtaining unit is further configured to obtain first length information, where the first length information is used to indicate a length of the DCI; and
the receiving unit is further configured to detect, based on the length indicated by the first length information, the DCI in the first area within the first TTI.

In a possible implementation, the first area is a time-frequency resource occupied by the DCI; and
the receiving unit is further configured to decode the DCI in the first area within the first TTI.

In a possible implementation, when the DCI is used to indicate a downlink grant for the first communications device, the first area includes the first N orthogonal frequency division multiplexing OFDM symbols of the first TTI, where N is an integer and N belongs to [1,14].

In a possible implementation, when the DCI is used to indicate an uplink grant for the first communications device, the first area includes the last M OFDM symbols of the first TTI, where M is an integer and M belongs to [1,14].

According to a fourth aspect, the present invention provides a second communications device, including:
a sending unit, configured to send first configuration information to a first communications device, where the first configuration information is used to instruct the first communications device to detect downlink control information DCI in a first area, and the first area is a time-frequency resource within a first transmission time interval TTI; and
the sending unit is further configured to send, to the first communications device, the DCI in the first area indicated in the first configuration information.

In a possible implementation, the first area is a time-frequency resource included by a physical downlink control channel PDCCH, or the first area is a time-frequency resource included by a physical downlink shared channel PDSCH.

In a possible implementation, the first area includes a preset orthogonal frequency division multiplexing OFDM symbol or resource block RB.

In a possible implementation, a time length of the first TTI is less than that of one subframe.

In a possible implementation, the first configuration information is further used to indicate a format of the DCI, and the format of the DCI includes at least one of format 1, format 1A, format 1B, format 1C, format 1D, format 2, format 2A, format 2B, format 2C, format 0, and format 4.

In a possible implementation, the first configuration information is transmitted to the first communications device by Radio Resource Control RRC signaling, a system information block SIB, or media access control MAC signaling.

In a possible implementation, the first configuration information is in a second area, where the second area is a time-frequency resource, within the first TTI, included by a PDCCH, or the second area is a time-frequency resource, within the first TTI, included by a PDSCH.

In a possible implementation, the first configuration information includes a radio network temporary identifier RNTI field, or the first configuration information includes a cyclic redundancy code CRC scrambled by the RNTI.

In a possible implementation, the first area is a time-frequency resource occupied by the DCI.

In a possible implementation, when the DCI is used to indicate a downlink grant for the first communications device, the first area includes the first N orthogonal frequency division multiplexing OFDM symbols within the first TTI, where N is an integer and N belongs to [1,14].

In a possible implementation, when the DCI is used to indicate an uplink grant for the first communications device, the first area includes the last M OFDM symbols within the first TTI, where M is an integer and M belongs to [1,14].

According to a fifth aspect, the present invention provides a first communications device, including: a processor, a memory, and a receiver, where the processor, the memory, and the receiver are connected to each other, and the processor is configured to execute a program stored in the memory;
the processor is configured to obtain first configuration information, where the first configuration information is used to instruct the first communications device to detect downlink control information DCI in a first area, and the first area is a time-frequency resource within a first transmission time interval TTI; and
the processor is further configured to detect, by using the receiver, the DCI in the first area within the first TTI.

In a possible implementation, the first area is a time-frequency resource included by a physical downlink control channel PDCCH, or the first area is a time-frequency resource included by a physical downlink shared channel PDSCH.

In a possible implementation, the first area includes a preset orthogonal frequency division multiplexing OFDM symbol or resource block RB.

In a possible implementation, a time length of the first TTI is less than that of one subframe.

In a possible implementation, the first configuration information is further used to indicate a format of the DCI, and the format of the DCI includes at least one of format 1, format 1A, format 1B, format 1C, format 1D, format 2, format 2A, format 2B, format 2C, format 0, and format 4.

In a possible implementation, the processor is further configured to receive, by using the receiver, the first configuration information sent by a second communications device.

In a possible implementation, the first configuration information is transmitted to the first communications device by Radio Resource Control RRC signaling, a system information block SIB, or media access control MAC signaling.

In a possible implementation, the processor is further configured to detect the first configuration information in a second area, where the second area is a time-frequency resource, within the first TTI, included by a PDCCH, or the second area is a time-frequency resource, within the first TTI, included by a PDSCH.

In a possible implementation, the first configuration information includes a radio network temporary identifier RNTI field, or the first configuration information includes a cyclic redundancy code CRC scrambled by the RNTI.

In a possible implementation, the processor is further configured to: obtain first length information, where the first length information is used to indicate a length of the DCI; and detect, by using the receiver based on the length indicated by the first length information, the DCI in the first area within the first TTI.

In a possible implementation, the first area is a time-frequency resource occupied by the DCI; and
the processor is further configured to decode the DCI in the first area within the first TTI.

In a possible implementation, when the DCI is used to indicate a downlink grant for the first communications device, the first area includes the first N orthogonal frequency division multiplexing OFDM symbols within the first TTI, where N is an integer and N belongs to [1,14].

In a possible implementation, when the DCI is used to indicate an uplink grant for the first communications device, the first area includes the last M OFDM symbols within the first TTI, where M is an integer and M belongs to [1,14].

According to a sixth aspect, the present invention provides a second communications device, including: a processor, a memory, and a transmitter, where the processor, the memory, and the transmitter are connected to each other, and the processor is configured to execute a program stored in the memory;
the processor is configured to send first configuration information to a first communications device by using the transmitter, where the first configuration information is used to instruct the first communications device to detect downlink control information DCI in a first area, and the first area is a time-frequency resource within a first transmission time interval TTI; and
the processor is further configured to send, to the first communications device by using the transmitter, the DCI in the first area indicated in the first configuration information.

In a possible implementation, the first area is a time-frequency resource included by a physical downlink control channel PDCCH, or the first area is a time-frequency resource included by a physical downlink shared channel PDSCH.

In a possible implementation, the first area includes a preset orthogonal frequency division multiplexing OFDM symbol or resource block RB.

In a possible implementation, a time length of the first TTI is less than that of one subframe.

In a possible implementation, when the DCI is used to indicate a downlink grant for the first communications device, the first area includes the first N orthogonal frequency division multiplexing OFDM symbols within the first TTI, where N is an integer and N belongs to [1,14].

In a possible implementation, when the DCI is used to indicate an uplink grant for the first communications device, the first area includes the last M OFDM symbols within the first TTI, where M is an integer and M belongs to [1,14].

In a possible implementation, the first configuration information is further used to indicate a format of the DCI, and the format of the DCI includes at least one of format 1, format 1A, format 1B, format 1C, format 1D, format 2, format 2A, format 2B, format 2C, format 0, and format 4.

In a possible implementation, the first configuration information is transmitted to the first communications device by Radio Resource Control RRC signaling, a system information block SIB, or media access control MAC signaling.

In a possible implementation, the first configuration information is in a second area, where the second area is a time-frequency resource, within the first TTI, included by a PDCCH, or the second area is a time-frequency resource, within the first TTI, included by a PDSCH.

In a possible implementation, the first configuration information includes a radio network temporary identifier RNTI field, or the first configuration information includes a cyclic redundancy code CRC scrambled by the RNTI.

In a possible implementation, the first area is a time-frequency resource occupied by the DCI.

In a possible implementation, when the DCI is used to indicate a downlink grant for the first communications device, the first area includes the first N orthogonal frequency division multiplexing OFDM symbols within the first TTI, where N is an integer and N belongs to [1,14].

In a possible implementation, when the DCI is used to indicate an uplink grant for the first communications device, the first area includes the last M OFDM symbols within the first TTI, where M is an integer and M belongs to [1,14].

According to a seventh aspect, the present invention provides an information transmission system, including a first communications device and a second communications device, where
the first communications device is the first communications device described in the third aspect or any one of the possible implementations of the third aspect, and the second communications device is the second communications device described in the fourth aspect or any one of the possible implementations of the fourth aspect; or
the first communications device is the first communications device described in the fifth aspect or any one of the possible implementations of the fifth aspect, and the second communications device is the second communications device described in the sixth aspect or any one of the possible implementations of the sixth aspect.

According to the information transmission method and system, and the device that are provided in the present invention, the first communications device obtains the first configuration information, where the first configuration information is used to instruct the first communications device to detect the downlink control information DCI in the first area; and detects the DCI in the first area within the first TTI. In this way, when the DCI can be transmitted in the PDSCH channel or the PDCCH channel, the first communications device needs to perform detection only in the first area, without detecting the PDSCH channel and the PDCCH channel. This resolves a prior-art problem that DCI detection performed by a receive end has relatively high complexity and causes relatively high power consumption.

It should be understood that, the foregoing general descriptions and the following detailed descriptions are merely examples and interpretations, and cannot be used to limit the present invention.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following descriptions show merely some embodiments of the present invention, and a person of ordinary skill in the art may still derive other drawings from these accompanying drawings without creative efforts.
FIG. 1 is a schematic flowchart of an information transmission method according to an embodiment of the present invention;
FIG. 2 is a schematic diagram of a time-frequency resource location of a DCI within a TTI according to an embodiment of the present invention;
FIG. 3 is a schematic flowchart of an information transmission method according to another embodiment of the present invention;
FIG. 4 is a schematic structural diagram of a first communications device according to an embodiment of the present invention;
FIG. 5 is a schematic structural diagram of a second communications device according to an embodiment of the present invention;
FIG. 6 is a schematic structural diagram of a first communications device according to another embodiment of the present invention;
FIG. 7 is a schematic structural diagram of a second communications device according to another embodiment of the present invention; and
FIG. 8 is a schematic structural diagram of an information transmission system according to an embodiment of the present invention.

The foregoing accompanying drawings show specific embodiments of the present invention, and more detailed descriptions are provided in the following. The accompanying drawings and text descriptions are not intended to limit the scope of the idea of the present invention in any manner, but are intended to describe the concept of the present invention to a person skilled in the art with reference to particular embodiments.

### DESCRIPTION OF EMBODIMENTS

To make the objectives, technical solutions, and advantages of the present invention clearer, the following further describes implementations of the present invention in detail with reference to the accompanying drawings.

An information transmission method and system, and a device that are provided in the embodiments of the present invention can be applied to a wireless network communications system such as a Long Term Evolution (English: Long Term Evolution, LTE for short) system, a 3rd Generation Partnership Project (English: 3rd Generation Partnership Project, 3GPP for short) system, or a Long Term Evolution-Advanced (English: Long Term Evolution-Advanced, LTE-A for short) system. Preferably, the information transmission method and system, and the device can be applied to information transmission between an evolved NodeB (English: Evolved NodeB, eNB for short) and user equipment (English: User Equipment, UE for short), for example, can be applied when the eNB transmits downlink control information (English: Downlink Control Information, DCI for short) to the UE. Generally, a time-frequency resource is divided into a plurality of radio frames in time domain for information transmission. One radio frame has a length of 10 milliseconds (English: Millisecond, ms for short), and includes 10 subframes each having a length of 1 ms. One subframe includes 12 or 14 orthogonal frequency division multiplexing (English: Orthogonal Frequency Division Multiplexing, OFDM for short) symbols. It should be noted that a transmission time interval (English: Transmission Time Interval, TTI for short) is a granularity for resource scheduling, and a radio frame/subframe/timeslot/symbol is a time scale of a radio resource. When a network device is to send data on a radio resource in unit of a TTI, there may be a correspondence between a TTI and a radio resource. The eNB transmits information to the UE in unit of a transmission time interval (English: Transmission Time Interval, TTI for short). In this case, the TTI may be one subframe, or one TTI may include only half a subframe or several OFDM symbols. Time-frequency resources within one TTI may be used to transmit different channels that are classified into different types based on different functions of to-be-transmitted information, for example, a physical downlink control channel (English: Physical Downlink Control Channel, PDCCH for short) and a physical downlink shared channel (English: Physical Downlink Shared Channel, PDSCH for short). The PDCCH channel can be used to transmit downlink control information (English: Downlink Control Information, DCI for short), and the DCI information is used to indicate data resource allocation, a modulation and demodulation scheme, and the like. Each channel occupies several OFDM symbols for information transmission. Certainly, descriptions are provided herein only by using an example and this does not mean that the present invention is limited thereto.

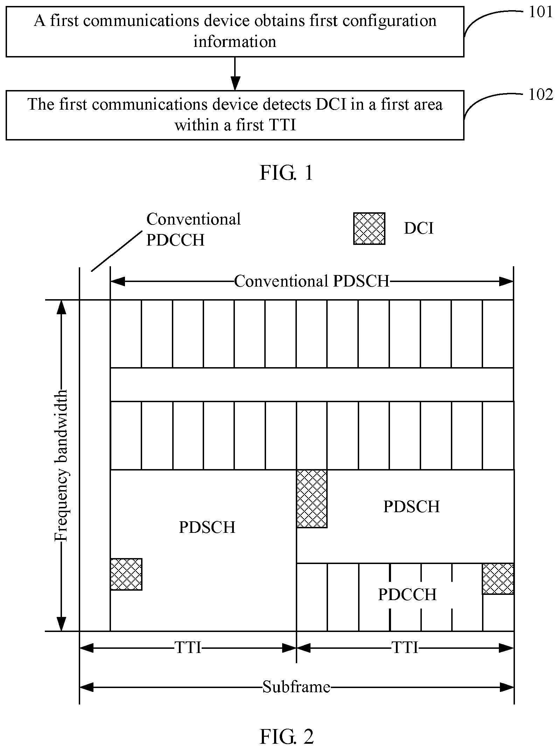

An embodiment of the present invention provides an information transmission method. The information transmission method is applied to a first communications device. The first communications device is a receive end device in information transmission. Preferably, the first communications device may be UE. In this embodiment, descriptions are provided by using an example in which the first communications device transmits information in a first TTI. The first TTI is one TTI and may be used to indicate a TTI in which the information is currently transmitted, and there is no difference between the first TTI and a generic TTI. The first TTI herein is only for clarity of description, and does not mean any limitation on the TTI. Referring to FIG. 1, the information transmission method provided in this embodiment includes the following steps.

101: The first communications device obtains first configuration information.

The first configuration information is used to instruct the first communications device to detect DCI in a first area. The first area is a time-frequency resource within a first TTI.

Optionally, the first area includes a preset OFDM symbol or resource block (English: Resource Block, RB for short), and the first area may be an odd-numbered symbol or RB within the first TTI, may be an even-numbered symbol or RB within the first TTI, may be the first several symbols or RBs within the first TTI, or may be the last several symbols or RBs within the first TTI.

The first area is a time-frequency resource included by a physical downlink control channel PDCCH, or the first area is a time-frequency resource included by a physical downlink shared channel PDSCH. Optionally, the PDCCH may be a common PDCCH, an enhanced physical downlink control channel (English: Enhanced Physical Downlink Control Channel, EPDCCH for short), or a short physical downlink control channel (English: Short Physical Downlink Control Channel, sPDCCH for short). The sPDCCH is used in a TTI whose length is less than that of one subframe. Optionally, the first configuration information is used to instruct the first communications device to detect the DCI in the first area; or the first configuration information may include one bit and is used to indicate whether the DCI is in the PDCCH or the PDSCH; or the first area may be prestored by the first communications device, and the first configuration information is used to only indicate whether the DCI is detected in the first area; or the first configuration information includes a specific time-frequency location of the first area. In a specific implementation, the first area is a time-frequency resource, within the first TTI, occupied by a PDCCH, or the first area is a time-frequency resource, within the first TTI, occupied by a PDSCH.

Optionally, when the DCI is used to indicate a downlink grant (English: downlink grant) for the first communications device, the first area includes the first N orthogonal frequency division multiplexing (English: Orthogonal Frequency Division Multiplexing, OFDM for short) symbols within the first TTI, where N is an integer and N belongs to [1,14]; when the DCI is used to indicate an uplink grant (English: uplink grant) for the first communications device, the first area includes the last M OFDM symbols within the first TTI, where M is an integer and M belongs to [1,14]. Preferably, both N and M are 1.

It should be noted that in the present invention, a time length of the first TTI is less than that of one subframe, and may be half a subframe or several OFDM symbols in one subframe. To reduce time-frequency resources occupied by control signaling, the DCI can alternatively be transmitted in the PDSCH channel, as shown in FIG. 2.

Preferably, if the DCI information is used to indicate the downlink grant for the first communications device, data transmitted in the PDSCH can be demodulated only after the DCI is obtained through detection. Therefore, the DCI may be set to occupy the first several OFDM symbols within the first TTI; or if the DCI information is used to indicate the uplink grant for the first communications device, the PUSCH scheduled by using the DCI occupies a TTI that is after the current TTI, and therefore the DCI may be set to occupy the last several OFDM symbols within the first TTI. Certainly, descriptions are provided herein only by using an example. Alternatively, the DCI may be transmitted in the PDCCH. The first configuration information is used to indicate a location of the DCI, so that the first communications device determines an area in which the DCI is to be detected, so as to reduce detection complexity and reduce power consumption of the first communications device.

Optionally, the first configuration information is further used to indicate a format (English: format) of the DCI, and the format of the DCI includes at least one of format 1, format 1A, format 1B, format 1C, format 1D, format 2, format 2A, format 2B, format 2C, format 0, and format 4. Optionally, among the DCI formats, format 0 and format 4 are used to schedule a physical uplink shared channel (English: Physical Uplink Shared Channel, PUSCH for short) and are used to indicate uplink grants; and format 1, format 1A, format 1B, format 1C, format 1D, format 2, format 2A, format 2B, and format 2C are used to schedule the PDSCH and are used to indicate downlink grants. Therefore, when the first configuration information indicates the format of the DCI, the first communications device needs to detect only the indicated format of the DCI when detecting the DCI. This greatly reduces detection complexity. It should be noted that the first configuration information may include a DCI format, or the first configuration information does not include a DCI format. A specific indication manner of the DCI format is not limited in the present invention. For example, the first configuration information may not include a DCI format, and the first area may be corresponding to several formats of the DCI formats. When the first configuration information indicates that detection is performed in the first area, the first communications device detects only these several DCI formats corresponding to the first area. Alternatively, the first configuration information includes a DCI format that the first communications device needs to detect. Specifically, a specific field of the first configuration information may be used to indicate the DCI format that needs to be detected. Certainly, descriptions are provided herein only by using an example.

The first configuration information may be preconfigured and prestored in the first communications device, or may be sent by a second communications device to the first communications device. This is not limited in the present invention. Herein, this embodiment lists three specific manners of obtaining the first configuration information for description. However, this does not mean that the present invention is limited thereto.

In a first manner, the first communications device receives the first configuration information sent by the second communications device, where the first configuration information is transmitted to the first communications device by being carried in high-layer signaling. Preferably, the first configuration information may be transmitted to the first communications device by Radio Resource Control (English: Radio Resource Control, RRC for short) signaling, a system information block (English: System Information Block, SIB for short), or media access control (English: Media Access Control, MAC for short) signaling. A high-layer signaling transmission frequency is relatively low. Therefore, when the high-layer signaling such as the RRC signaling or the SIB is used to transmit the first configuration information, signaling overheads can be reduced. In addition, a DCI location can be flexibly adjusted, so that impact on data transmission caused by unchanged DCI location cannot be caused.

In a second manner, the first configuration information is prestored in the first communications device. For example, the first area indicated in the first configuration information may be specified by using a network communication protocol. In this way, the first communications device needs to detect the DCI only in the first area. This reduces detection complexity.

In a third manner, the first communications device detects the first configuration information in a second area. The second area is a time-frequency resource, within the first TTI, included by a PDCCH, or the second area is a time-frequency resource, within the first TTI, included by a PDSCH. In the third manner, the first configuration information is transmitted to the first communications device by using physical layer signaling. Therefore, it is necessary to first detect the first configuration information and obtain the first configuration information. This manner is more flexible for adjustment of the first area. To be specific, the DCI location can be flexibly adjusted. In addition, both the first area and the second area impose a limitation on a detection range. This reduces detection complexity to some extent. For example, the second area may be a time-frequency resource occupied by the first configuration information, and the first communications device may decode the first configuration information directly in the second area. A length of the first configuration information may be a fixed length, or a length of the first configuration information may be the same as a length of the DCI.

Optionally, the second area may include a preset orthogonal frequency division multiplexing OFDM symbol or resource block RB. For example, the second area may be an odd-numbered resource block RB within a second TTI, the second area is an even-numbered RB within the second TTI, the second area is the first several RBs within the second TTI, or the second area is the last several RBs within the second TTI. Preferably, the second TTI is the same as the first TTI, or the second TTI is a TTI before the first TTI.

Optionally, the first configuration information includes a radio network temporary identifier (English: Radio Network Temporary Identity, RNTI for short) field, or the first configuration information includes a cyclic redundancy code (English: Cyclic Redundancy Code, CRC for short) scrambled by the RNTI.

102: The first communications device detects DCI in a first area within a first TTI.

It should be noted that the detection of the DCI or the detection of the first configuration information described in the present invention means receiving the DCI or the first configuration information and performing blind detection on the received information. The detection is a specific implementation of correct reception, decoding, and obtaining of the information. Certainly, description of a meaning of the detection in the present invention is provided herein only by using an example and this does not mean that the present invention is limited thereto.

Optionally, in a preferred implementation, before step 102, the first communications device may obtain first length information. The first length information is used to indicate a length of the DCI. When performing step 102, the first communications device may detect, based on the length indicated by the first length information, the DCI in the first area within the first TTI. The first communications device may prestore the first length information; in other words, the DCI detected by the first communications device keeps unchanged in length within a specific period of time. In this way, the first communications device needs to detect only the DCI having the fixed length. This reduces detection complexity.

In addition, optionally, in another preferred implementation, the first area is a time-frequency resource occupied by the DCI; and the first communications device may decode the DCI in the first area within the first TTI. Because the first area directly indicates the time-frequency resource occupied by the DCI; in other words, the first area is a specific resource location of the DCI in the first TTI. The first communications device may directly decode the DCI. This improves data reception efficiency.

According to the information transmission method provided in this embodiment, the first communications device obtains the first configuration information, where the first configuration information is used to instruct the first communications device to detect the downlink control information DCI in the first area; and detects the DCI in the first area within the first TTI. In this way, when the DCI can be transmitted in the PDSCH channel or the PDCCH channel, the first communications device needs to perform detection only in the first area, without detecting the PDSCH channel and the PDCCH channel, especially in an application scenario in which the time length of the first TTI is less than that of one subframe. This resolves a prior-art problem that DCI detection performed by a receive end has relatively high complexity and causes relatively high power consumption.

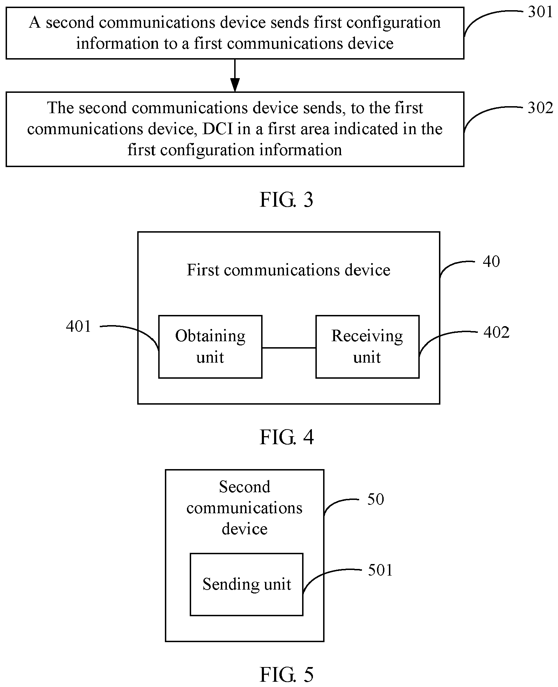

With reference to the embodiment corresponding to FIG. 1, another embodiment of the present invention provides an information transmission method. The information transmission method is applied to a second communications device. The second communications device is a transmit end device in information transmission. Preferably, the first communications device may be an eNB. Referring to FIG. 3, the information transmission method provided in this embodiment includes the following steps.

301: The second communications device sends first configuration information to a first communications device.

The first configuration information is used to instruct the first communications device to detect DCI in a first area. The first area is a time-frequency resource area within a first transmission time interval TTI. Optionally, the first area is a time-frequency resource included by a PDCCH, or the first area is a time-frequency resource included by a PDSCH. Preferably, a time length of the first TTI is less than that of one subframe. In a preferred implementation, the first area is a time-frequency resource occupied by the DCI.

Preferably, the first area includes a preset orthogonal frequency division multiplexing OFDM symbol or resource block RB.

Optionally, when the DCI is used to indicate a downlink grant for the first communications device, the first area includes the first N orthogonal frequency division multiplexing OFDM symbols within the first TTI, where N is an integer and N belongs to [1,14]; when the DCI is used to indicate an uplink grant for the first communications device, the first area includes the last M OFDM symbols within the first TTI, where M is an integer and M belongs to [1,14].

Optionally, the first configuration information is further used to indicate a format of the DCI, and the format of the DCI includes at least one of format 1, format 1A, format 1B, format 1C, format 1D, format 2, format 2A, format 2B, format 2C, format 0, and format 4.

According to the first manner of transmitting the first configuration information described in the embodiment corresponding to FIG. 1, the first configuration information may be transmitted to the first communications device by RRC signaling, a SIB, or MAC signaling.

According to the third manner of transmitting the first configuration information described in the embodiment corresponding to FIG. 1, the first configuration information is in a second area. The second area is a time-frequency resource, within the first TTI, included by a PDCCH, or the second area is a time-frequency resource, within the first TTI, included by a PDSCH.

Optionally, the first configuration information includes a radio network temporary identifier RNTI field, or the first configuration information includes a cyclic redundancy code CRC scrambled by the RNTI.

302: The second communications device sends, to the first communications device, DCI in a first area indicated in the first configuration information.

According to the information transmission method provided in this embodiment, the second communications device sends the first configuration information to the first communications device, where the first configuration information is used to instruct the first communications device to detect the downlink control information DCI in the first area; and sends, to the first communications device, the DCI in the first area indicated in the first configuration information. In this way, the second communications device determines, by sending the first configuration information to the first communications device, the area in which the first communications device detects the DCI, and the first communications device needs to perform detection only in the first area, without detecting the PDSCH channel and the PDCCH channel. This resolves a prior-art problem that DCI detection performed by a receive end has relatively high complexity and causes relatively high power consumption.

According to the foregoing embodiment corresponding to FIG. 1, an embodiment of the present invention provides a first communications device, configured to perform the information transmission method described in the foregoing embodiment corresponding to FIG. 1. Preferably, the first communications device may be UE. Referring to FIG. 4, the first communications device 40 includes an obtaining unit 401 and a receiving unit 402.

The obtaining unit 401 is configured to obtain first configuration information. The first configuration information is used to instruct the first communications device to detect downlink control information DCI in a first area, and the first area is a time-frequency resource within a first transmission time interval TTI.

The receiving unit 402 is configured to detect the DCI in the first area within the first TTI.

Optionally, the first area is a time-frequency resource included by a physical downlink control channel PDCCH, or the first area is a time-frequency resource included by a physical downlink shared channel PDSCH.

Optionally, the first area includes a preset orthogonal frequency division multiplexing OFDM symbol or resource block RB.

Optionally, a time length of the first TTI is less than that of one subframe.

Optionally, when the DCI is used to indicate a downlink grant for the first communications device, the first area includes the first N orthogonal frequency division multiplexing OFDM symbols within the first TTI, where N is an integer and N belongs to [1,14]; when the DCI is used to indicate an uplink grant for the first communications device, the first area includes the last M OFDM symbols within the first TTI, where M is an integer and M belongs to [1,14].

Optionally, the first configuration information is further used to indicate a format of the DCI, and the format of the DCI includes at least one of format 1, format 1A, format 1B, format 1C, format 1D, format 2, format 2A, format 2B, format 2C, format 0, and format 4.

Optionally, the receiving unit 402 is further configured to receive the first configuration information sent by a second communications device.

Optionally, the first configuration information may be transmitted to the first communications device by Radio Resource Control RRC signaling, a system information block SIB, or media access control MAC signaling.

Optionally, the obtaining unit 401 is further configured to detect the first configuration information in a second area. The second area is a time-frequency resource, within the first TTI, included by a PDCCH, or the second area is a time-frequency resource, within the first TTI, included by a PDSCH.

Optionally, the first configuration information includes a radio network temporary identifier RNTI field, or the first configuration information includes a cyclic redundancy code CRC scrambled by the RNTI.

Optionally, the obtaining unit 401 is further configured to obtain first length information. The first length information is used to indicate a length of the DCI.

The receiving unit 402 is further configured to detect, based on the length indicated by the first length information, the DCI in the first area within the first TTI.

Optionally, the first area is a time-frequency resource occupied by the DCI. The receiving unit 402 is further configured to decode the DCI in the first area within the first TTI.

The first communications device provided in this embodiment obtains the first configuration information, where the first configuration information is used to instruct the first communications device to detect the downlink control information DCI in the first area; and detects the DCI in the first area within the first TTI. In this way, when the DCI can be transmitted in the PDSCH channel or the PDCCH channel, the first communications device needs to perform detection only in the first area, without detecting the PDSCH channel and the PDCCH channel, especially in an application scenario in which the time length of the first TTI is less than that of one sub frame. This resolves a prior-art problem that DCI detection performed by a receive end has relatively high complexity and causes relatively high power consumption.

According to the foregoing embodiment corresponding to FIG. 3, an embodiment of the present invention provides a second communications device, configured to perform the information transmission method described in the foregoing embodiment corresponding to FIG. 3. Preferably, the second communications device may be an eNB. Referring to FIG. 5, the second communications device 50 includes a sending unit 501.

The sending unit 501 is configured to send first configuration information to a first communications device. The first configuration information is used to instruct the first communications device to detect downlink control information DCI in a first area, and the first area is a time-frequency resource within a first transmission time interval TTI.

The sending unit 501 is further configured to send, to the first communications device, the DCI in the first area indicated in the first configuration information.

Optionally, the first area is a time-frequency resource included by a physical downlink control channel PDCCH, or the first area is a time-frequency resource included by a physical downlink shared channel PDSCH.

Optionally, the first area includes a preset orthogonal frequency division multiplexing OFDM symbol or resource block RB.

Optionally, a time length of the first TTI is less than that of one subframe.

When the DCI is used to indicate a downlink grant for the first communications device, the first area includes the first N orthogonal frequency division multiplexing OFDM symbols within the first TTI, where N is an integer and N belongs to [1,14]; when the DCI is used to indicate an uplink grant for the first communications device, the first area includes the last M OFDM symbols within the first TTI, where M is an integer and M belongs to [1,14].

Optionally, the first configuration information is further used to indicate a format of the DCI, and the format of the DCI includes at least one of format 1, format 1A, format 1B, format 1C, format 1D, format 2, format 2A, format 2B, format 2C, format 0, and format 4.

Optionally, the first configuration information may be transmitted to the first communications device by Radio Resource Control RRC signaling, a system information block SIB, or media access control MAC signaling.

Optionally, the first configuration information is in a second area. The second area is a time-frequency resource, within the first TTI, included by a PDCCH, or the second area is a time-frequency resource, within the first TTI, included by a PDSCH.

Optionally, the first configuration information includes a radio network temporary identifier RNTI field, or the first configuration information includes a cyclic redundancy code CRC scrambled by the RNTI.

Optionally, the first area may be a time-frequency resource occupied by the DCI.

The second communications device provided in this embodiment sends the first configuration information to the first communications device, where the first configuration information is used to instruct the first communications device to detect the downlink control information DCI in the first area; and sends, to the first communications device, the DCI in the first area indicated in the first configuration information. In this way, the second communications device determines, by sending the first configuration information to the first communications device, the area in which the first communications device detects the DCI, and the first communications device needs to perform detection only in the first area, without detecting the PDSCH channel and the PDCCH channel. This resolves a prior-art problem that DCI detection performed by a receive end has relatively high complexity and causes relatively high power consumption.

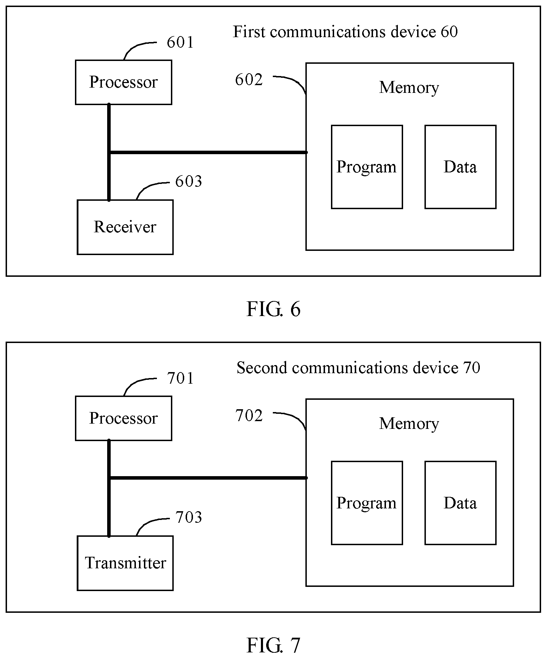

According to the foregoing embodiment corresponding to FIG. 1, another embodiment of the present invention provides a first communications device, configured to perform the information transmission method described in the foregoing embodiment corresponding to FIG. 1. Preferably, the first communications device may be UE. Referring to FIG. 6, the first communications device 60 includes a processor 601, a memory 602, and a receiver 603, where the processor 601, the memory 602, and the receiver 603 are connected to each other, and the processor 601 is configured to execute a program stored in the memory 602. It should be noted that the receiver 603 may have an independent program for control. For example, the receiver 603 may be provided with a separate chip. Alternatively, the receiver 603 only receives a signal simply, and the processor 601 completes a further data processing process by invoking the program. This is not limited in the present invention. In this embodiment, descriptions are provided by using an example in which the processor 601 receives information by using the receiver 604 by invoking the program.

The processor 601 is configured to obtain first configuration information. The first configuration information is used to instruct the first communications device to detect downlink control information DCI in a first area, and the first area is a time-frequency resource within a first transmission time interval TTI.

The processor 601 is further configured to detect, by using the receiver 603, the DCI in the first area within the first TTI.

Optionally, the first area is a time-frequency resource included by a physical downlink control channel PDCCH, or the first area is a time-frequency resource included by a physical downlink shared channel PDSCH.

Optionally, the first area includes a preset orthogonal frequency division multiplexing OFDM symbol or resource block RB.

Optionally, a time length of the first TTI is less than that of one subframe.

Optionally, when the DCI is used to indicate a downlink grant for the first communications device, the first area includes the first N orthogonal frequency division multiplexing OFDM symbols within the first TTI, where N is an integer and N belongs to [1,14]; when the DCI is used to indicate an uplink grant for the first communications device, the first area includes the last M OFDM symbols within the first TTI, where M is an integer and M belongs to [1,14].

Optionally, the first configuration information is further used to indicate a format of the DCI, and the format of the DCI includes at least one of format 1, format 1A, format 1B, format 1C, format 1D, format 2, format 2A, format 2B, format 2C, format 0, and format 4.

Optionally, the processor 601 is further configured to receive, by using the receiver 603, the first configuration information sent by a second communications device.

Optionally, the first configuration information may be transmitted to the first communications device by Radio Resource Control RRC signaling, a system information block SIB, or media access control MAC signaling.

Optionally, the processor 601 is further configured to detect the first configuration information in a second area. The second area is a time-frequency resource, within the first TTI, included by a PDCCH, or the second area is a time-frequency resource, within the first TTI, included by a PDSCH.

Optionally, the first configuration information includes a radio network temporary identifier RNTI field, or the first configuration information includes a cyclic redundancy code CRC scrambled by the RNTI.

Optionally, the processor 601 is further configured to: obtain first length information, where the first length information is used to indicate a length of the DCI; and detect, by using the receiver 603 based on the length indicated by the first length information, the DCI in the first area within the first TTI.

Optionally, the first area is a time-frequency resource occupied by the DCI.

The processor 601 is further configured to decode the DCI in the first area within the first TTI.

The first communications device provided in this embodiment obtains the first configuration information, where the first configuration information is used to instruct the first communications device to detect the downlink control information DCI in the first area; and detects the DCI in the first area within the first TTI. In this way, when the DCI can be transmitted in the PDSCH channel or the PDCCH channel, the first communications device needs to perform detection only in the first area, without detecting the PDSCH channel and the PDCCH channel, especially in an application scenario in which the time length of the first TTI is less than that of one subframe. This resolves a prior-art problem that DCI detection performed by a receive end has relatively high complexity and causes relatively high power consumption.

According to the foregoing embodiment corresponding to FIG. 3, another embodiment of the present invention provides a second communications device, configured to perform the information transmission method described in the foregoing embodiment corresponding to FIG. 3. Preferably, the second communications device may be an eNB. Referring to FIG. 5, the first communications device 70 includes a processor 701, a memory 702, and a transmitter 703, where the processor 701, the memory 702, and the transmitter 703 are connected to each other, and the processor 701 is configured to execute a program stored in the memory 702. It should be noted that the transmitter 703 may have an independent program for control. For example, the transmitter 703 may be provided with a separate chip. Alternatively, the transmitter 703 only sends a signal simply, and the processor 701 completes a further data processing process by invoking the program. This is not limited in the present invention. In this embodiment, descriptions are provided by using an example in which the processor 701 sends information by using the transmitter 703 by invoking the program.

The processor 701 is configured to send, by using the transmitter 703, first configuration information to a first communications device. The first configuration information is used to instruct the first communications device to detect downlink control information DCI in a first area, and the first area is a time-frequency resource within a first transmission time interval TTI.

The processor 701 is further configured to send, to the first communications device by using the transmitter 703, the DCI in the first area indicated in the first configuration information.

Optionally, the first area is a time-frequency resource included by a physical downlink control channel PDCCH, or the first area is a time-frequency resource included by a physical downlink shared channel PDSCH.

Optionally, the first area includes a preset orthogonal frequency division multiplexing OFDM symbol or resource block RB.

Optionally, a time length of the first TTI is less than that of one subframe.

Optionally, when the DCI is used to indicate a downlink grant for the first communications device, the first area includes the first N orthogonal frequency division multiplexing OFDM symbols within the first TTI, where N is an integer and N belongs to [1,14]; when the DCI is used to indicate an uplink grant for the first communications device, the first area includes the last M OFDM symbols within the first TTI, where M is an integer and M belongs to [1,14].

Optionally, the first configuration information is further used to indicate a format of the DCI, and the format of the DCI includes at least one of format 1, format 1A, format 1B, format 1C, format 1D, format 2, format 2A, format 2B, format 2C, format 0, and format 4.

Optionally, the first configuration information may be transmitted to the first communications device by Radio Resource Control RRC signaling, a system information block SIB, or media access control MAC signaling.

Optionally, the first configuration information is in a second area. The second area is a time-frequency resource, within the first TTI, included by a PDCCH, or the second area is a time-frequency resource, within the first TTI, included by a PDSCH.

Optionally, the first configuration information includes a radio network temporary identifier RNTI field, or the first configuration information includes a cyclic redundancy code CRC scrambled by the RNTI.

Optionally, the first area is a time-frequency resource occupied by the DCI.

The second communications device provided in this embodiment sends the first configuration information to the first communications device, where the first configuration information is used to instruct the first communications device to detect the downlink control information DCI in the first area; and sends, to the first communications device, the DCI in the first area indicated in the first configuration information. In this way, the second communications device determines, by sending the first configuration information to the first communications device, the area in which the first communications device detects the DCI, and the first communications device needs to perform detection only in the first area, without detecting the PDSCH channel and the PDCCH channel. This resolves a prior-art problem that DCI detection performed by a receive end has relatively high complexity and causes relatively high power consumption.

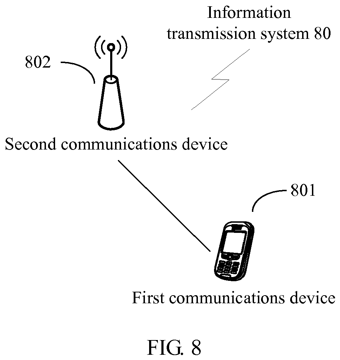

According to the foregoing embodiments corresponding to FIG. 1 and FIG. 3, an embodiment of the present invention provides an information transmission system, configured to perform the information transmission methods described in the foregoing embodiments corresponding to FIG. 1 and FIG. 3. Referring to FIG. 8, the information transmission system 80 provided in this embodiment includes a first communications device 801 and a second communications device 802. Preferably, the first communications device 801 may be UE, and the second communications device 802 may be an eNB.

Specifically, the first communications device 801 is the first communications device described in the embodiment corresponding to FIG. 4, and the second communications device is the second communications device described in the embodiment corresponding to FIG. 5.

Alternatively, the first communications device 801 is the first communications device described in the embodiment corresponding to FIG. 6, and the second communications device is the second communications device described in the embodiment corresponding to FIG. 7.

According to the information transmission system provided in the present invention, the first communications device obtains first configuration information, where the first configuration information is used to instruct the first communications device to detect downlink control information DCI in a first area; and detects the DCI in the first area within a first TTI. In this way, when the DCI can be transmitted in a PDSCH channel or a PDCCH channel, the first communications device needs to perform detection only in the first area, without detecting the PDSCH channel and the PDCCH channel. This resolves a prior-art problem that DCI detection performed by a receive end has relatively high complexity and causes relatively high power consumption.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

The foregoing descriptions are merely example embodiments of the present invention, but are not intended to limit the present invention. Any modification, equivalent replacement, or improvement made without departing from the spirit and principle of the present invention should fall within the protection scope of the present invention.

## Claims

1. An information transmission method, wherein the method comprises:
obtaining, by a first communications device, first configuration information, wherein the first configuration information is used to instruct the first communications device to detect downlink control information DCI in a first area, and the first area is a time-frequency resource within a first transmission time interval TTI; and
detecting, by the first communications device, the DCI in the first area within the first TTI.

2. The method according to claim 1, wherein
the first area is a time-frequency resource comprised in a physical downlink control channel PDCCH, or the first area is a time-frequency resource comprised in a physical downlink shared channel PDSCH.

3. The method according to claim 1 or 2, wherein
the first area comprises a preset orthogonal frequency division multiplexing OFDM symbol or resource block RB.

4. The method according to any one of claims 1 to 3, wherein
a time length of the first TTI is less than that of one subframe.

5. The method according to any one of claims 1 to 4, wherein
the first configuration information is further used to indicate a format of the DCI, and the format of the DCI comprises at least one of format 1, format 1A, format 1B, format 1C, format 1D, format 2, format 2A, format 2B, format 2C, format 0, and format 4.

6. The method according to any one of claims 1 to 5, wherein the obtaining, by a first communications device, first configuration information comprises:
receiving, by the first communications device, the first configuration information sent by a second communications device.

7. The method according to claim 6, wherein
the first configuration information is transmitted to the first communications device by Radio Resource Control RRC signaling, a system information block SIB, or media access control MAC signaling.

8. The method according to claim 6, wherein the receiving, by the first communications device, the first configuration information sent by a second communications device comprises:
detecting, by the first communications device, the first configuration information in a second area, wherein the second area is a time-frequency resource, within the first TTI, comprised in a PDCCH, or the second area is a time-frequency resource, within the first TTI, comprised in a PDSCH.

9. The method according to any one of claims 6 to 8, wherein
the first configuration information comprises a radio network temporary identifier RNTI field, or the first configuration information comprises a cyclic redundancy code CRC scrambled by the RNTI.

10. The method according to any one of claims 1 to 9, wherein before the detecting, by the first communications device, the DCI in the first area within the first TTI, the method further comprises:
obtaining, by the first communications device, first length information, wherein the first length information is used to indicate a length of the DCI; and
the detecting, by the first communications device, the DCI in the first area within the first TTI comprises:
detecting, by the first communications device based on the length indicated by the first length information, the DCI in the first area within the first TTI.

11. The method according to any one of claims 1 to 10, wherein the first area is a time-frequency resource occupied by the DCI; and
the detecting, by the first communications device, the DCI in the first area within the first TTI comprises:
decoding, by the first communications device, the DCI in the first area within the first TTI.

12. The method according to any one of claims 1 to 11, wherein
when the DCI is used to indicate a downlink grant for the first communications device, the first area comprises the first N orthogonal frequency division multiplexing OFDM symbols within the first TTI, wherein N is an integer and N belongs to [1,14].

13. The method according to any one of claims 1 to 12, wherein
when the DCI is used to indicate an uplink grant for the first communications device, the first area comprises the last M OFDM symbols within the first TTI, wherein M is an integer and M belongs to [1,14].

14. An information transmission method, wherein the method comprises:
sending, by a second communications device, first configuration information to a first communications device, wherein the first configuration information is used to instruct the first communications device to detect downlink control information DCI in a first area, and the first area is a time-frequency resource within a first transmission time interval TTI; and
sending, by the second communications device to the first communications device, the DCI in the first area indicated in the first configuration information.

15. The method according to claim 14, wherein
the first area is a time-frequency resource comprised in a physical downlink control channel PDCCH, or the first area is a time-frequency resource comprised in a physical downlink shared channel PDSCH.

16. The method according to claim 14 or 15, wherein
the first area comprises a preset orthogonal frequency division multiplexing OFDM symbol or resource block RB.

17. The method according to any one of claims 14 to 16, wherein
a time length of the first TTI is less than that of one subframe.

18. The method according to any one of claims 14 to 17, wherein
the first configuration information is further used to indicate a format of the DCI, and the format of the DCI comprises at least one of format 1, format 1A, format 1B, format 1C, format 1D, format 2, format 2A, format 2B, format 2C, format 0, and format 4.

19. The method according to any one of claims 14 to 18, wherein
the first configuration information is transmitted to the first communications device by Radio Resource Control RRC signaling, a system information block SIB, or media access control MAC signaling.

20. The method according to any one of claims 14 to 18, wherein
the first configuration information is in a second area, wherein the second area is a time-frequency resource, within the first TTI, comprised in a PDCCH, or the second area is a time-frequency resource, within the first TTI, comprised in a PDSCH.

21. The method according to any one of claims 14 to 20, wherein
the first configuration information comprises a radio network temporary identifier RNTI field, or the first configuration information comprises a cyclic redundancy code CRC scrambled by the RNTI.

22. The method according to any one of claims 14 to 21, wherein
the first area is a time-frequency resource occupied by the DCI.

23. The method according to any one of claims 14 to 22, wherein
when the DCI is used to indicate a downlink grant for the first communications device, the first area comprises the first N orthogonal frequency division multiplexing OFDM symbols within the first TTI, wherein N is an integer and N belongs to [1,14].

24. The method according to any one of claims 14 to 23, wherein
when the DCI is used to indicate an uplink grant for the first communications device, the first area comprises the last M OFDM symbols within the first TTI, wherein M is an integer and M belongs to [1,14].

25. A first communications device, comprising:
an obtaining unit, configured to obtain first configuration information, wherein the first configuration information is used to instruct the first communications device to detect downlink control information DCI in a first area, and the first area is a time-frequency resource within a first transmission time interval TTI; and
a receiving unit, configured to detect the DCI in the first area within the first TTI.

26. The device according to claim 25, wherein
the first area is a time-frequency resource comprised in a physical downlink control channel PDCCH, or the first area is a time-frequency resource comprised in a physical downlink shared channel PDSCH.

27. The device according to claim 25 or 26, wherein
the first area comprises a preset orthogonal frequency division multiplexing OFDM symbol or resource block RB.

28. The method according to any one of claims 25 to 27, wherein
a time length of the first TTI is less than that of one subframe.

29. The device according to any one of claims 25 to 28, wherein
the first configuration information is further used to indicate a format of the DCI, and the format of the DCI comprises at least one of format 1, format 1A, format 1B, format 1C, format 1D, format 2, format 2A, format 2B, format 2C, format 0, and format 4.

30. The device according to any one of claims 25 to 29, wherein
the receiving unit is further configured to receive the first configuration information sent by the second communications device.

31. The device according to claim 30, wherein
the first configuration information is transmitted to the first communications device by Radio Resource Control RRC signaling, a system information block SIB, or media access control MAC signaling.

32. The device according to claim 30, wherein
the receiving unit is further configured to detect the first configuration information in a second area, wherein the second area is a time-frequency resource, within the first TTI, comprised in a PDCCH, or the second area is a time-frequency resource, within the first TTI, comprised in a PDSCH.

33. The device according to any one of claims 30 to 32, wherein
the first configuration information comprises a radio network temporary identifier RNTI field, or the first configuration information comprises a cyclic redundancy code CRC scrambled by the RNTI.

34. The device according to any one of claims 25 to 33, wherein
the obtaining unit is further configured to obtain first length information, wherein the first length information is used to indicate a length of the DCI; and
the receiving unit is further configured to detect, based on the length indicated by the first length information, the DCI in the first area within the first TTI.

35. The device according to any one of claims 25 to 34, wherein the first area is a time-frequency resource occupied by the DCI; and
the receiving unit is further configured to decode the DCI in the first area within the first TTI.

36. The device according to any one of claims 25 to 35, wherein
when the DCI is used to indicate a downlink grant for the first communications device, the first area comprises the first N orthogonal frequency division multiplexing OFDM symbols within the first TTI, wherein N is an integer and N belongs to [1,14].

37. The device according to any one of claims 25 to 36, wherein
when the DCI is used to indicate an uplink grant for the first communications device, the first area comprises the last M OFDM symbols within the first TTI, wherein M is an integer and M belongs to [1,14].

38. A second communications device, comprising:
a sending unit, configured to send first configuration information to a first communications device, wherein the first configuration information is used to instruct the first communications device to detect downlink control information DCI in a first area, and the first area is a time-frequency resource within a first transmission time interval TTI; and
the sending unit is further configured to send, to the first communications device, the DCI in the first area indicated in the first configuration information.

39. The device according to claim 38, wherein
the first area is a time-frequency resource comprised in a physical downlink control channel PDCCH, or the first area is a time-frequency resource comprised in a physical downlink shared channel PDSCH.

40. The device according to claim 38 or 39, wherein
the first area comprises a preset orthogonal frequency division multiplexing OFDM symbol or resource block RB.

41. The method according to any one of claims 38 to 40, wherein
a time length of the first TTI is less than that of one subframe.

42. The device according to any one of claims 38 to 41, wherein
the first configuration information is further used to indicate a format of the DCI, and the format of the DCI comprises at least one of format 1, format 1A, format 1B, format 1C, format 1D, format 2, format 2A, format 2B, format 2C, format 0, and format 4.

43. The device according to any one of claims 38 to 42, wherein
the first configuration information is transmitted to the first communications device by Radio Resource Control RRC signaling, a system information block SIB, or media access control MAC signaling.

44. The device according to any one of claims 38 to 43, wherein
the first configuration information is in a second area, wherein the second area is a time-frequency resource, within the first TTI, comprised in a PDCCH, or the second area is a time-frequency resource, within the first TTI, comprised in a PDSCH.

45. The device according to any one of claims 38 to 44, wherein
the first configuration information comprises a radio network temporary identifier RNTI field, or the first configuration information comprises a cyclic redundancy code CRC scrambled by the RNTI.

46. The device according to any one of claims 38 to 45, wherein
the first area is a time-frequency resource occupied by the DCI.

47. The device according to any one of claims 38 to 46, wherein
when the DCI is used to indicate a downlink grant for the first communications device, the first area comprises the first N orthogonal frequency division multiplexing OFDM symbols within the first TTI, wherein N is an integer and N belongs to [1,14].

48. The device according to any one of claims 38 to 47, wherein
when the DCI is used to indicate an uplink grant for the first communications device, the first area comprises the last M OFDM symbols within the first TTI, wherein M is an integer and M belongs to [1,14].

49. A first communications device, wherein the first communications device comprises: a processor, a memory, and a receiver, wherein the processor, the memory, and the receiver are connected to each other, the memory is configured to store a program and data, and the processor is configured to invoke the program stored in the memory to perform the method according to any one of claims 1 to 13.

50. A second communications device, wherein the first communications device comprises: a processor, a memory, and a transmitter, wherein the processor, the memory, and the transmitter are connected to each other, the memory is configured to store a program and data, and the processor is configured to invoke the program stored in the memory to perform the method according to any one of claims 14 to 24.

51. An information transmission system, comprising a first communications device and a second communications device, wherein
the first communications device is the first communications device according to any one of claims 25 to 37, and the second communications device is the second communications device according to any one of claims 38 to 48; or
the first communications device is the first communications device according to claim 49, and the second communications device is the second communications device according to claim 50.
